# EUROPEAN PATENT APPLICATION

(11) **EP 4 651 280 A1**
(43) Date of publication of application: **19.11.2025**
(21) Application number: 24882668.7
(22) Date of filing: 24.09.2024
(51) Int. Cl.: H01M 50/184, H01M 50/186, H01M 50/172, H01M 50/183, B29C 65/00, H01M 50/178, H01M 50/105, B29L 31/00

(54) **SECONDARY BATTERY AND SEALING DEVICE FOR MANUFACTURING SAME**

(30) Priority: 26.10.2023 KR 20230144415; 10.06.2024 KR 20240074993
(71) Applicant: LG Energy Solution, Ltd., Seoul 07335 (KR)
(72) Inventor: NOH, Hyung-Jun, Daejeon 34122 (KR); KIM, Young-Soon, Daejeon 34122 (KR); YUN, Hong-Kwan, Daejeon 34122 (KR)
(74) Representative: Goddar, Heinz J.
(86) International application number: PCT/KR2024/014401
(87) International publication number: WO 2025/089639

(57) **Abstract**

Provided is a secondary battery having improved sealing reliability and a sealing device capable of reducing a tact time. The secondary battery includes a battery case accommodating therein an electrode assembly with an electrode lead protruding therefrom and including a sealing portion in which an outer perimeter is sealed. The sealing portion includes a first sealing portion on the electrode lead side of the battery case; and a second sealing portion on the electrode lead side of the battery case. The first sealing portion and the second sealing portion each have one end and another end in a protruding direction of the electrode lead, and the another end of the second sealing portion extends further in a direction opposite to the protruding direction of the electrode lead than the another end of the first sealing portion.

## Description

### TECHNICAL FIELD

The present disclosure relates to a secondary battery and a sealing device for manufacturing a secondary battery. In particular, the present disclosure relates to a secondary battery having improved sealing reliability and a sealing device capable of reducing a tact time during the manufacturing of such a secondary battery. This application is based on and claims priority from Korean Patent Application Nos. 10-2023-0144415 and 10-2024-0074993, filed on October 26, 2023 and June 10, 2024, respectively, with the Korean Intellectual Property Office, the disclosures of which are incorporated herein in their entireties by reference.

### BACKGROUND ART

Lithium secondary batteries, among the rechargeable secondary batteries, are used as power sources for portable electronic devices, or when multiple batteries are connected in series, the lithium secondary batteries are used in high-power hybrid vehicles and electric vehicles (EVs). Lithium secondary batteries have an operating voltage that is three times higher than that of nickel-cadmium batteries or nickel-metal hydride batteries, and exhibit excellent energy density per unit weight characteristics, making them the most commonly used secondary batteries today.

The lithium secondary batteries are generally classified, based on the shape of the battery case, into cylindrical and prismatic batteries in which an electrode assembly is accommodated in a cylindrical or prismatic metal can, and pouch-type batteries in which an electrode assembly is accommodated in a battery case made of an aluminum laminate sheet. Here, the electrode assembly accommodated in the battery case includes a positive electrode, a negative electrode, and a separator interposed between the positive and negative electrodes. As a rechargeable power-generating device, the electrode assembly is classified into two types: a jelly-roll type in which a long sheet-shaped positive electrode and negative electrode, coated with active material, are wound with a separator interposed therebetween; and a stacked type in which multiple positive and negative electrodes are sequentially stacked with separators interposed therebetween.

Among these batteries, pouch-type batteries, with a structure in which a stacked or stacked/folded electrode assembly is accommodated in a battery case made of an aluminum laminate sheet, are in high demand due to the advantages such as lower manufacturing costs, lighter weight, and ease of form modification.

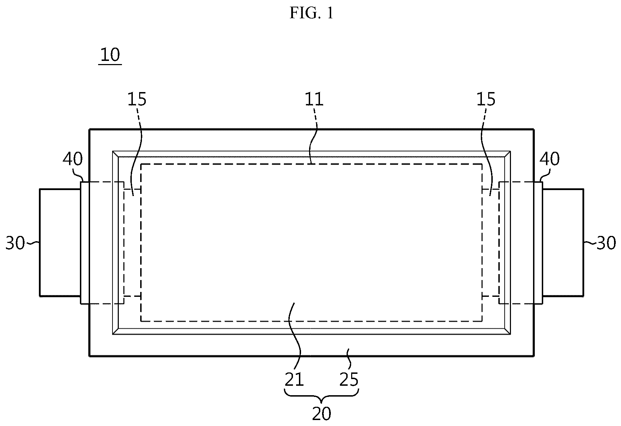

FIG. 1 is a top view of a typical pouch-type secondary battery.

Referring to FIG. 1, a conventional pouch-type secondary battery 10 includes a battery case 20 having an electrode assembly 11 mounted in an accommodation portion 21 and a sealing portion 25 with a structure in which the outer perimeter is sealed. In addition, the pouch-type secondary battery 10 includes an electrode lead 30 that is electrically connected to an electrode tab 15 included in the electrode assembly 11 and protrudes toward the outside of the battery case 20 via the sealing portion 25, and a lead film 40 is positioned between the upper and lower portions of the electrode lead 30 and the sealing portion 25.

The pouch-type secondary battery 10 needs to effectively prevent electrolyte leakage and to be manufactured with relatively high sealing strength to ensure excellent sealing reliability. Meanwhile, with the increasing demand for higher energy density in secondary batteries, there is a problem in that the amount of gas generated inside the pouch-type secondary battery 10 also increases due to the reasons such as an increase in the amount of active material. Therefore, when the sealing strength of the sealing portion 25 of the pouch-type secondary battery 10 is insufficient, the increased gas generation may cause a venting phenomenon in which, for example, the battery case 20 bursts. Consequently, the sealing of the pouch-type secondary battery 10 has become an aspect that needs to be managed more seriously.

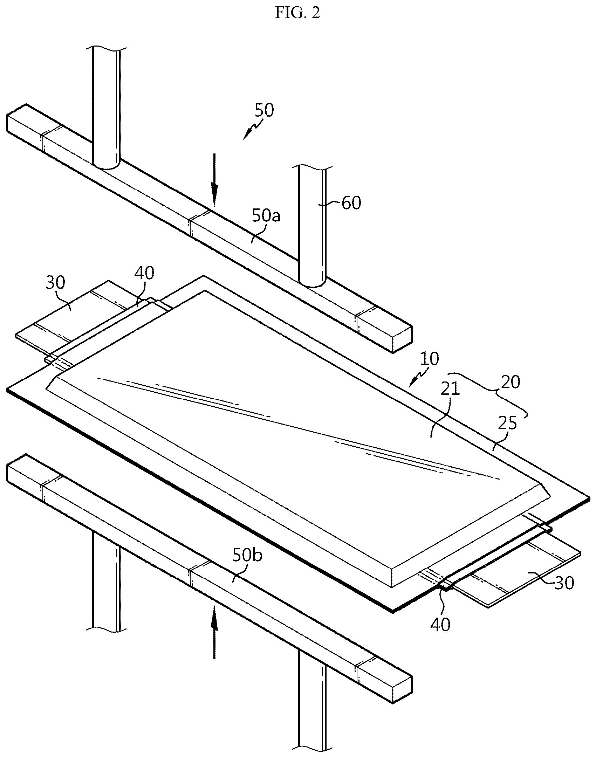

FIG. 2 is a schematic view of a conventional sealing device for manufacturing the pouch-type secondary battery 10.

Referring to FIG. 2, the conventional sealing device 50 includes a pair of sealing blocks 50a and 50b, which are positioned above and below a sealing portion 25 of a pouch-type secondary battery 10, respectively, and a lifter 60 capable of moving the sealing blocks. The lifter 60 is installed to raise and lower the blocks to press the sealing portion 25. The sealing device 50 generates heat through a heating element (not illustrated) accommodated in the sealing blocks 50a and 50b to seal the sealing portion 25. The inner surface of the battery case 20 of the pouch-type secondary battery 10 is made of a resin such as polypropylene (PP). The sealing is achieved as the sealing device 50 applies heat and pressure to the sealing portion 25, causing the resin on the inner surface of the battery case 20 to melt and fuse.

The pouch-type secondary battery 10 includes, for example, three or four sealing portions 25 along the edge of the battery case 20, and it takes a certain amount of time to seal these sealing portions 25 using the sealing device 50. Therefore, when manufacturing pouch-type secondary batteries, the sealing time may be minimized by considering the tact time. However, the conventional sealing device 50 has limitations in supplying sufficient heat within a short period of time. In addition, while the sealing strength improves as the temperature of the sealing device 50 increases, damage may occur to the surface of the battery case 20 beyond a certain point. Thus, there is a limitation to increasing the temperature of the sealing device 50. Considering this point, when the temperature of the sealing device 50 is limited and the sealing time is extended, it becomes difficult to manage the tact time.

In addition, the sealing portion 25 on the side where an electrode lead 30 protrudes should also be fused to a lead film 40 between the upper and lower battery cases 20. Thus, a particularly large amount of heat is required during the sealing process. Considering this, conventionally, there is also a case where a lead heater system is introduced to heat the electrode lead 30 to supplement the insufficient heat in the sealing portion 25 on the side where the electrode lead 30 protrudes and indirectly supply heat to the sealing portion 25 near the electrode lead 30.

However, conventional sealing devices still have limitations in supplying sufficient heat for sealing within a relatively short time. Furthermore, when a thick, high-formability pouch is used as the exterior material, there is an even greater limitation in supplying sufficient heat to the sealing portion. In this way, the conventional sealing device requires improvement in tact time management.

### DISCLOSURE

### Technical Problem

The present disclosure provides a secondary battery with high sealing reliability.

In addition, the present disclosure provides a sealing device for manufacturing a secondary battery that is capable of reducing the tact time.

### Technical Solution

According to an aspect, the present disclosure provides a secondary battery. The secondary battery includes a battery case accommodating therein an electrode assembly with an electrode lead protruding therefrom and including a sealing portion in which an outer perimeter is sealed. The sealing portion includes a first sealing portion on the electrode lead side of the battery case, and a second sealing portion on the electrode lead side of the battery case. The first sealing portion and the second sealing portion each have one end and the other end in a protruding direction of the electrode lead, and the other end of the second sealing portion extends further in a direction opposite to the protruding direction of the electrode lead than the other end of the first sealing portion.

The first sealing portion may have a length greater than that of the second sealing portion, and the second sealing portion may have a width greater than that of the first sealing portion.

The first sealing portion and the second sealing portion may be at least partially overlapped in the protruding direction of the electrode lead.

The one end of the second sealing portion and the one end of the first sealing portion may be positioned on a same line.

The one end of the second sealing portion may be spaced apart from the one end of the first sealing portion in the direction opposite to the protruding direction of the electrode lead.

The secondary battery may further include a lead film positioned at a portion corresponding to the first sealing portion and the second sealing portion, and the lead film may have one end and the other end in the protruding direction of the electrode lead. A polymer ball may be formed by the resin fused between the battery case and the lead film inside the second sealing portion, and the polymer ball may be formed so as not to extend beyond the other end of the lead film.

According to another aspect, the present disclosure provides a sealing device that seals a battery case accommodating therein an electrode assembly with an electrode lead protruding therefrom. The sealing device includes: a main sealing block including an upper sealing block configured to apply pressure to a first sealing portion of the battery case on the electrode lead side in a top-down direction, and a lower sealing block configured to apply pressure to the first sealing portion in a bottom-up direction; and a post sealing block including an upper sealing block configured to apply pressure to a second sealing portion of the battery case on the electrode lead side in the top-down direction, and a lower sealing block configured to apply pressure to the second sealing portion in the bottom-up direction. The first sealing portion and the second sealing portion each have one end and the other end in the protruding direction of the electrode lead, and the main sealing block and the post sealing block have different shapes such that the other end of the second sealing portion extends further in a direction opposite to the protruding direction of the electrode lead than the other end of the first sealing portion.

The electrode lead includes a lead film attached thereto and having one end and the other end in the protruding direction of the electrode lead, and the main sealing block includes, on each of a bottom surface of the upper sealing block and a top surface of the lower sealing block, a recess that corresponds to the electrode lead side including the lead film.

The bottom surface of the upper sealing block and the top surface of the lower sealing block of the main sealing block may each include a peripheral pressing portion configured to press the battery case, and the recess may be configured to press the electrode lead and the lead film.

The recess may include an electrode lead pressing portion configured to press the electrode lead and an intermediate pressing portion connecting the electrode lead pressing portion to the peripheral pressing portion in a stepwise manner.

The main sealing block may have a width greater than that of the electrode lead including the lead film, such that the main sealing block extends to the battery case around the electrode lead.

The post sealing block may have a length smaller than that of the main sealing block.

The upper sealing block and the lower sealing block of the main sealing block may have a step formed in a top-down direction, and the upper sealing block and the lower sealing block of the post sealing block may have a step formed on a side opposite to the protruding direction of the electrode lead.

The post sealing block may include a first pressing portion configured to press a portion overlapping the first sealing portion, and a second pressing portion configured to press a portion in a direction opposite to the protruding direction of the electrode lead relative to the first pressing portion.

The second pressing portion has a width that does not exceed 50% of that of the first pressing portion.

The first pressing portion may protrude further toward the electrode lead than the second pressing portion.

The height difference between the first pressing portion and the second pressing portion may be about 0.1 mm to 5 mm.

For example, the second pressing portion may protrude in a direction orthogonal to the first pressing portion, the first pressing portion may have a first pressing surface, which is a single flat surface that comes into contact with the battery case, and the second pressing portion may have a second pressing surface, which is a single flat surface that comes into contact with the battery case. The pressing force applied by the first pressing surface may be greater than the pressing force applied by the second pressing surface.

As another example, the second pressing portion may protrude in a direction orthogonal to the first pressing portion. The first pressing portion includes a peripheral pressing portion configured to press the battery case, an electrode lead pressing portion configured to press the electrode lead, and an intermediate pressing portion that connects the electrode lead pressing portion and the peripheral pressing portion in a stepwise manner.

When the battery case is positioned in the main sealing block, the resin fused between the battery case and the lead films is pushed into the first sealing portion by the main sealing block, and a polymer ball is initially formed, and when the battery case moves from the main sealing block and is positioned in the post sealing block, the polymer ball is pressed by the post sealing block.

The post sealing block has a step formed so as to prevent the pressed polymer ball from extending beyond the other end of the lead film.

### Advantageous Effects

The secondary battery of the present disclosure has excellent sealing strength by including the first sealing portion and the second sealing portion. The other end of the second sealing portion extends further in the direction opposite to the protruding direction of the electrode lead than the other end of the first sealing portion, allowing a sufficient sealing area of the sealing portion to be secured. Such a secondary battery may effectively suppress or prevent the electrolyte therein from leaking to the outside, while also sufficiently withstanding the internal gas pressure generated inside the secondary battery during use. Thus, the venting issue of the secondary battery may be solved.

The secondary battery of the present disclosure may have high sealing strength by controlling the shape of the sealing portion, particularly the shape and position of the polymer ball inside the battery case. The sealing device of the present disclosure is designed to be suitable for manufacturing the secondary battery while controlling the shape and position of the polymer ball in this way.

The sealing device of the present disclosure has an sealing block improved to allow a secondary battery having sufficient sealing strength to be manufactured even with a short tact time. Therefore, the sealing device may contribute to enhancing the productivity of the secondary battery.

The sealing device of the present disclosure eliminates the need to seal at a high temperature that could damage the surface of the battery case. Even with low-temperature sealing, the dual sealing process involving the main sealing and the post sealing may ensure that the secondary battery produced has high sealing strength.

With the sealing device of the present disclosure, the profile of the sealing portion may be improved, the degree of fusion of the sealing portion, and, as a result, resistance to the venting pressure may be improved.

With the sealing device of the present disclosure, the deviation between cells may be reduced during mass production of secondary batteries.

With the sealing device of the present disclosure, since the sealing device is configured to include the main sealing block and the post sealing block, the sealing strength of the sealing portion may be increased. The position of a polymer ball within the sealing portion may be restricted, and complete sealing may be possible. Therefore, the electrolyte inside the battery case may be effectively prevented from leaking to the outside, and the sealing strength and sealing reliability of the secondary battery may be improved.

### DESCRIPTION OF DRAWINGS

The following drawings attached hereto exemplify embodiments of the present disclosure and, together with the detailed description to be described later, serve to further understand the technical idea of the present disclosure. Therefore, the present disclosure should not be construed as being limited to the matters illustrated in the drawings.
FIG. 1 is a top view of a typical pouch-type secondary battery.
FIG. 2 is a schematic view of a conventional sealing device.
FIG. 3 is a top view of a secondary battery according to an embodiment of the present disclosure.
FIG. 4 is an enlarged view of the alternated long and short dash line area in FIG. 3.
FIG. 5 is an enlarged view of the alternated long and short dash line area in FIG. 3, according to another embodiment of the present disclosure.
FIG. 6 is a cross-sectional view taken along line A-A' of FIG. 3.
FIG. 7 is a photograph showing the appearance of a secondary battery according to an experimental example of the present disclosure.
FIG. 8 is a cross-sectional photograph showing the shape of a sealing portion in the secondary battery according to an experimental example of the present disclosure.
FIG. 9 is a schematic top view of a sealing device, according to an embodiment of the present disclosure.
FIG. 10 is view of the sealing device as viewed in direction B in FIG. 9.
FIG. 11 is a cross-sectional view taken along line C-C' in FIG. 9.
FIG. 12 is a cross-sectional view taken along line D-D' in FIG. 9.
FIG. 13 is a perspective view of a main sealing block included in the sealing device of FIG. 9.
FIG. 14 is a perspective view of a post sealing block included in the sealing device of FIG. 9.
FIG. 15 illustrates a modification of the post sealing block illustrated in FIG. 14.
FIG. 16 is a view illustrating the upper post sealing block of FIG. 15 as seen from direction E.
FIG. 17 is a cross-sectional view of the sealing step performed by the post sealing block of FIG. 14.

### DETAILED DESCRIPTION

Hereinafter, embodiments of the present disclosure will be described with reference to the attached drawings. Prior to this, the terms and words used in the specification and claims should not be construed as limited to their ordinary or dictionary meanings, but should be interpreted with meanings and concepts consistent with the technical idea of the present disclosure based on a principle that the inventor may appropriately define the concepts of terms in order to explain his or her invention in the best way.

In some of the accompanying drawings, corresponding components are given the same reference numerals. A person ordinarily skilled in the art will appreciate that the drawings illustrate elements simply and clearly and are not necessarily drawn to scale. For example, in order to aid understanding of various embodiments, the dimensions of some elements illustrated in the drawings may be exaggerated compared to other elements. In addition, elements that are useful or essential in commercially implementable embodiments but are known in the art may often not be described in order to avoid impeding the understanding of the spirit of various embodiments of the present disclosure.

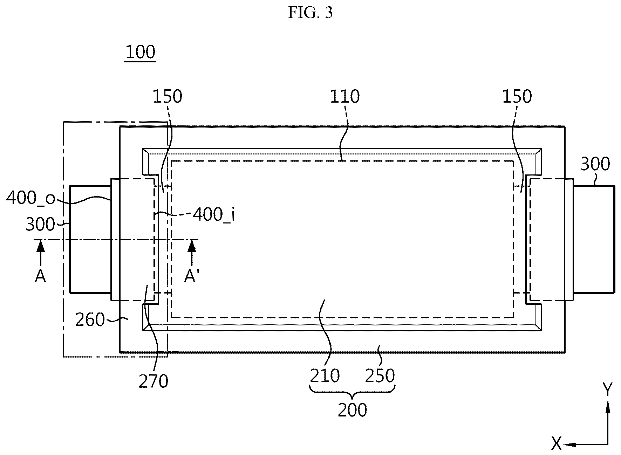

FIG. 3 is a top view of a secondary battery according to an embodiment of the present disclosure.

Referring to FIG. 3, the secondary battery 100 includes an electrode assembly 110 and a battery case 200. The electrode assembly 110 has an electrode lead 300 protruding therefrom. The battery case 200 accommodates this electrode assembly 110 and includes a sealing portion 250 where the outer perimeter is sealed. In addition, there is a lead film 400 positioned at a portion corresponding to the sealing portion 250 on at least one of the upper and lower portions of the electrode lead 300.

The sealing portion 250 includes a first sealing portion 260 on the electrode lead 300 side of the battery case 200, and a second sealing portion 270 on the electrode lead 300 side of the battery case 200. In the illustrated example, the electrode leads 300 protrude in opposite directions from both sides. Meanwhile, depending on the type of secondary battery, the electrode leads 300 may protrude in the same direction rather than in opposite directions.

The electrode assembly 110 may be mounted in the accommodation portion 210 of the battery case 200. The electrode leads 300 are electrically connected to the electrode tabs 150 included in the electrode assembly 110 and may protrude outwardly from the battery case 200 via the sealing portion 250.

According to an embodiment, the lead films 400 are included in both the upper and lower portions of the electrode leads 300. In the illustrated example, in the protruding direction (the X-axis direction) of the left electrode lead 300, the lead film 400 includes one end 400_o and the other end 400_i. The lead film 400 is located above and below the electrode lead 300 to ensure sealing with the battery case 200.

In the illustrated example, the secondary battery 100 may be a roughly rectangular plate-shaped cell having long sides in the direction along the X-axis, short sides in the direction along the Y-axis, and a thickness in the Z-axis direction smaller than the length in the X-axis or Y-axis direction. The electrode leads 300 may be provided on the short sides of the secondary battery 100. This secondary battery 100 has an efficient structure for increasing energy density by stacking multiple batteries one on top of the other in the Z-axis direction.

The battery case 200 may be made of a laminate sheet including a resin layer and a metal layer. According to an embodiment, the battery case 200 may be made of a laminate sheet including an outer resin layer, a barrier metal layer preventing penetration of substances, and an inner resin layer for sealing.

The outer resin layer should prevent scratches and corrosion of the barrier metal layer and have excellent resistance to the external environment. Thus, a tensile strength and weather resistance may be above a certain level. In this regard, the outer resin layer may include polyethylene naphthalate (PEN), polyethylene terephthalate (PET), or stretched nylon. The outer resin layer may be positioned close to the barrier metal layer, and an adhesive layer may be interposed between the outer resin layer and the barrier metal layer. The above-mentioned barrier metal layer is not particularly restricted in terms of type, as long as it is a flexible metal film. In addition to the function of preventing the inflow of foreign substances, including gas and moisture, or the leakage of electrolyte, the barrier metal layer may be made of, for example, aluminum (Al) or an aluminum alloy to enhance the strength of the battery case. For the aluminum alloy, for example, alloy numbers 8079, 1N30, 8021, 3003, 3004, 3005, 3104, and 3105 may be used, and these alloys may be used alone or in combination with two or more. A polymer resin with thermal fusion properties, low hygroscopicity with respect to the electrolyte, and resistance to expansion or corrosion from the electrolyte may be used for the inner resin layer. The inner resin may be made of polypropylene (PP), more specifically, non-stretched polypropylene (CPP). The inner resin layer is positioned close to the barrier metal layer. Considering their respective functions, the outer resin layer, the barrier metal layer, and the inner resin layer have a thickness of tens to hundreds of micrometer (µm).

The electrode assembly 110 may be formed as a jelly-roll type (rolled type), stack type (laminated type), or composite type (stack/folded type) structure. For example, the electrode assembly 110 may include a positive electrode, a negative electrode, and a separator placed between them.

The electrode leads 300 are electrically connected to the electrode tabs 150 drawn out from the positive electrode and the negative electrode included in the electrode assembly 110, and protrudes to the outside of the battery case 200 via the sealing portion 250. In addition, each lead film 400 is positioned on either the upper or lower side of an electrode lead 300 at a portion corresponding to the sealing portion 250. Accordingly, the lead film 400 may prevent a short circuit from occurring in the electrode lead 300 during thermal fusion with the sealing portion 250, while improving the sealing property of the sealing portion 250 and the electrode lead 300. The lead film 400 may be made of polypropylene (PP).

Referring to FIG. 3, the lead film 400 may have a greater width (length) in the Y-axis direction than the electrode lead 300. Here, the width of the lead film 400 refers to the maximum value of the distance from one end of the lead film 400 to the other end in the direction orthogonal to the protruding direction of the electrode lead 300 (the Y-axis direction), and the width of the electrode lead 300 refer to the maximum value of the distance from one end of the electrode lead 300 to the other end in the direction orthogonal to the protruding direction of the electrode lead 300. Accordingly, since the width of the lead film 400 is greater than that of the electrode lead 300, the side surfaces of the electrode lead 300 may be suppressed or prevented from being exposed to the outside.

The lead film 400 may have a length greater than the width of the sealing portion 250 based on the protruding direction of the electrode lead 300 and may have a length smaller than the length of the electrode lead 300. Here, the length of the lead film 400 refers to the maximum value of the distance between one end 400_o and the other end 400_i of the lead film 400 in the protruding direction of the electrode lead 300. The width of the sealing portion 250 refers to the maximum value of the distance from one end of the sealing portion 250 to the other end in the protruding direction of the electrode lead 300. The length of the electrode lead 300 refers to the maximum value of the distance from one end of the electrode lead 300 to the other end in the protruding direction of the electrode lead 300. Accordingly, the lead film 400 may enable sealing between the electrode lead 300 and the battery case 200 without interfering with the electrical connection of the electrode lead 300.

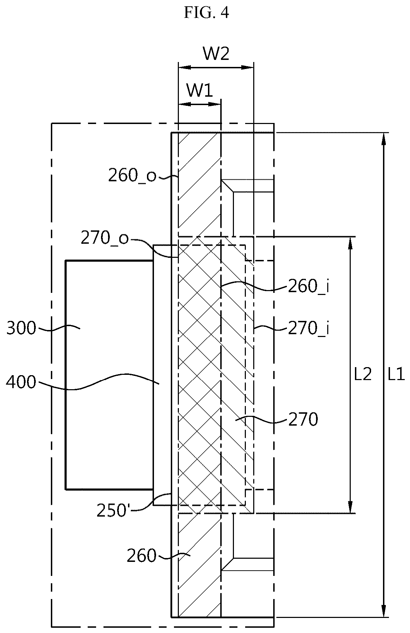

FIG. 4 is an enlarged view of the alternated long and short dash line area of FIG. 3.

Referring to FIG. 4, the sealing portion 250 includes a first sealing portion 260 and a second sealing portion 270. The lead film 400 is positioned in a portion corresponding to the first sealing portion 260 and the second sealing portion 270.

In this specification, the first sealing portion 260 and the second sealing portion 270 refer to an area that should be sealed or an area that has been sealed in the secondary battery 100. In the illustrated example, the first sealing portion 260 and the second sealing portion 270 may have areas that overlap each other. In addition, the first sealing portion 260 and the second sealing portion 270 refer to an area that is sealed by applying heat and pressure to the overlapping area of the electrode lead 300, the lead film 400, and the battery case 200 through a sealing device to melt the inner resin layer of the battery case 200 and the lead film 400, and then solidifying them. In addition, the first sealing portion 260 refers to a portion that is pressed by a main sealing block 600 of the sealing device 500, which will be described later, and the second sealing portion 270 refers to a portion that is pressed by a post sealing block 700 of the sealing device 500, which will be described later. When observing the secondary battery 100 from the outside, the presence of the first sealing portion 260 and the second sealing portion 270 may be confirmed with the naked eye by checking the pressed marks. However, the pressed marks do not exactly represent the shapes of the first sealing portion 260 and the second sealing portion 270. Inside an actual battery case 200, the inner resin layer of the battery case 200 and the lead film 400 melt and are sealed by the pressure of the main sealing block 600 and the post sealing block 700, but the pressed marks observed from the outside of the secondary battery 100 may vary depending on the shape of the portion where the main sealing block 600 is brought into contact with the battery case 200 and the shape of the portion where the post sealing block 700 is brought into contact with the battery case 200.

The first sealing portion 260 includes one end 260_o and the other end 260_i in the protruding direction of the electrode lead 300, and the second sealing portion 270 includes one end (270_o) and the other end 270_i in the protruding direction of the electrode lead 300. Here, the other end 270_i of the second sealing portion 270 extends further in the direction opposite to the protruding direction of the electrode lead 300) than the other end 260_i of the first sealing portion 260. It can be said that the first sealing portion 260 of the sealing portion 250 is closer to the outside of the edge of the battery case 200, and the second sealing portion 270 is closer to the accommodation portion 210 of the battery case 200 than the first sealing portion 260.

The secondary battery 100 of the present disclosure is excellent in sealing strength by including the first sealing portion 260 and the second sealing portion 270. The sealing strength may be evaluated by measuring the strength at the time of peeling while separating the battery cases 200 on both sides located above and below the sealing portion 250.

The other end 270_i of the second sealing portion 270 extends further in the direction opposite to the protruding direction of the electrode lead 300 than the other end 260_i of the first sealing portion 260, thereby ensuring a sufficient sealing area for the sealing portion 250. Such a secondary battery 100 may effectively suppress or prevent the electrolyte therein from leaking to the outside, while also sufficiently withstanding the internal gas pressure generated inside the secondary battery 100 during use, thereby solving the venting issue of the secondary battery.

The length L1 of the first sealing portion 260 may be longer than the length L2 of the second sealing portion 270. Here, the length L1 of the first sealing portion 260 refers to the maximum value of the distance from one end of the first sealing portion 260 to the other end in a direction perpendicular to the protruding direction of the electrode lead 300, and the length L2 of the second sealing portion 270 refers to the maximum value of the distance from one end of the second sealing portion 270 to the other end in a direction perpendicular to the protruding direction of the electrode lead 300. The first sealing portion 260 seals the outer periphery of the battery case 200 on the electrode lead 300 side. The second sealing portion 270 is positioned further toward the electrode assembly 110 than the first sealing portion 260 and additionally seals the periphery of the electrode lead 300.

The width W1 of the first sealing portion 260 and the width W2 of the second sealing portion 270 may be set to conditions that are capable of suppressing or preventing moisture from penetrating into the battery case 200, for an extended period of time. As a non-limiting example, the width W1 of the first sealing portion 260 and the width W2 of the second sealing portion 270 may each be about 2 mm to 10 mm. The width of the portion where the first sealing portion 260 and the second sealing portion 270 overlap may be about 1 mm to 9 mm.

According to an embodiment, the width W2 of the second sealing portion 270 may be greater than the width W1 of the first sealing portion 260. The width W2 of the second sealing portion 270 refers to the maximum value of the distance between one end 270_o and the other end 270_i of the second sealing portion 270 in the protruding direction of the electrode lead 300. The width W1 of the first sealing portion 260 refers to the maximum value of the distance between one end 260_o and the other end 260_i of the first sealing portion 260 in the protruding direction of the electrode lead 300.

The first sealing portion 260 and the second sealing portion 270 overlap at least partially in the protruding direction of the electrode lead 300. As the number of sealing operations increases on the same area, the sealing strength may also increase. When the first sealing portion 260 and the second sealing portion 270 overlap, the sealing strength of the overlapping area of the sealing portion 250 may increase. Accordingly, the resistance to the venting pressure when the gas generated inside the secondary battery 100 is discharged to the outside may also be increased, and the safety may also be enhanced.

When the entire edge area of the battery case 200 is fused in the width direction to form the sealing portion 250, the resin layer inside the battery case 200 may melt due to heat, causing a problem in which the melted resin layer leaks to the outside along the contact surface of the battery case 200. In order to prevent such a problem, a non-sealing portion 250' with a width of about 2 mm or less may be provided on the outermost edge of the battery case 200, and the sealing portion 250 may be formed only on the edge of the battery case 200 positioned further inward than the non-sealing portion.

In FIG. 4, one end 270_o of the second sealing portion 270 and one end 260_o of the first sealing portion 260 are positioned on the same line. In this case, the overlap between the first sealing portion 260 and the second sealing portion 270 may be maximized, thereby further enhancing the sealing strength of the sealing portion 250.

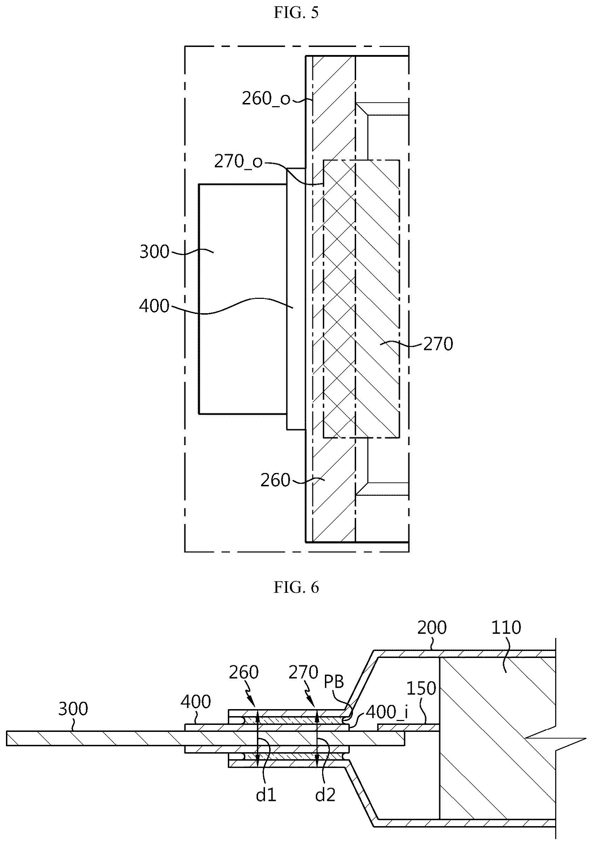

In FIG. 5, which illustrates a modification, one end 270_o of the second sealing portion 270 is spaced apart from one end 260_o of the first sealing portion 260 in the direction opposite to the protrusion direction of the electrode lead 300. In this case, when forming the second sealing portion 270 after forming the first sealing portion 260, there is no need to align one end 270_o of the second sealing portion 270 and one end 260_o of the first sealing portion 260. Thus, a process margin may be secured in a method of forming the first sealing portion 260 first and then sequentially forming the second sealing portion 270. In case the resin layer inside the battery case 200 is melted by heat during the formation of the second sealing portion 270, it is possible to prevent the resin from leaking to the outside beyond one end 260_o of the first sealing portion 260 along the contact surface of the battery case 200.

The first sealing portion 260 and the second sealing portion 270 may overlap. The width W2 of the second sealing portion 270 may be greater than the width W1 of the first sealing portion 260, allowing the other end 270_i of the second sealing portion 270 to extend further in the direction opposite to the protruding direction of the electrode lead 300 than the other end 260_i of the first sealing portion 260. According to an embodiment, when the width W1 of the first sealing portion 260 and the width W2 of the second sealing portion 270 are be the same, or the width W1 of the first sealing portion 260 is greater than the width W2 of the second sealing portion 270, the degree of overlap between the first sealing portion 260 and the second sealing portion 270 may be adjusted to allow the other end 270_i of the second sealing portion 270 to extend further in the direction opposite to the protruding direction of the electrode lead 300 than the other end 260_i of the first sealing portion 260.

FIG. 6 is a cross-sectional view taken along line A-A' of FIG. 3.

Referring to FIG. 6, a polymer ball PB is formed by a fused resin between the battery case 200 and the lead film 400 inside the second sealing portion 270 so that the polymer ball does not come out of the other end 400_i of the lead film 400. The polymer ball PB is described below. Here, the inside of the second sealing portion 270 refers to the direction from the outer resin layer of the battery case 200 toward the inner resin layer, moving closer to the electrode assembly 110, and refers to the portion adjacent to the inner resin layer.

As mentioned above, the battery case 200 may include an outer resin layer, a barrier metal layer preventing penetration of substances, and an inner resin layer for sealing. When the battery case 200 includes the inner resin layer as described above and is heated and pressed while thermally fusing the edge of the battery case 200 to form the sealing portion 250, the inner resin layer of the battery case 200 and the resin of the lead film 400 melt, forming a melted and clumped portion of resin between the inner surface of the battery case 200 and the lead film 400, which is called a polymer ball PB. When the polymer ball PB is formed appropriately, the sealing strength increases, which enhances the sealing performance, and venting does not occur even under high internal pressure.

In the present disclosure, the polymer ball PB is formed so as not to extend beyond the other end 400_i of the lead film 400, thereby enhancing the sealing performance to prevent venting or explosion even under high pressure. When the polymer ball PB flows further into the inside of the secondary battery 100 beyond the other end 400_i of the lead film 400, a venting issue may occur. When the polymer ball PB is positioned beyond the other end 400_i of the lead film 400, high-pressure gas may be concentrated in the space between the polymer ball PB and the battery case 200 during venting. When the polymer ball PB is torn because it cannot withstand the high-pressure gas, the lead film 400 will also be torn along with the polymer ball PB, and the sealing portion of the lead film 400 will be permanently damaged. According to the present disclosure, resistance to the venting pressure may be improved by ensuring that the polymer ball PB is more securely fused and is not positioned beyond the other end 400_i of the lead film 400, thereby preventing the polymer ball PB from tearing.

According to the present disclosure, a secondary battery 100 having high sealing strength may be provided by controlling the shape of the sealing portion 250, particularly the shape and position of the polymer ball PB inside the battery case 200. According to the present disclosure, the profile of the sealing portion 250 may be improved by controlling the shape of the polymer ball PB, and the degree of fusion of the sealing portion 250 and resistance to the venting pressure may be improved by including the first sealing portion 260 and the second sealing portion 270.

As a non-limiting example, the sealing thickness d1 of the first sealing portion 260 may be about 800 µm to 1,300 µm. The sealing thickness d2 of the overlapping portion of the first sealing portion 260 and the second sealing portion 270 may be about 700 µm to 1,250 µm. Here, the sealing thickness is the total thickness of the cross-section of the sealing portion (along the Z-axis direction) after sealing. For example, the sealing thickness is the sum of the thicknesses of the battery case 200, the lead film 400, and the electrode lead 300. By forming the second sealing section 270 that at least partially overlaps with the first sealing portion 260, the sealing thickness may be further reduced, which may lead to an increase in the sealing strength.

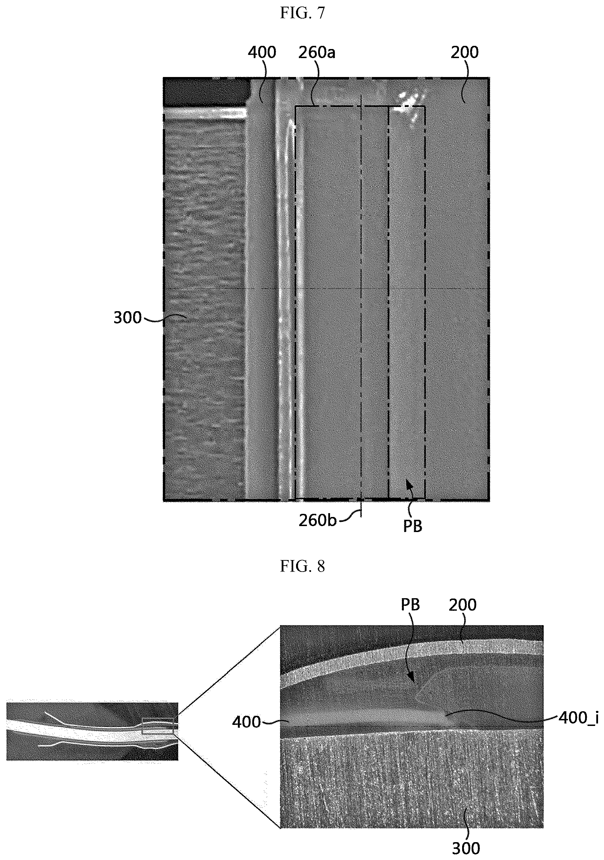

FIG. 7 is a photograph showing the appearance of a secondary battery according to an experimental example of the present disclosure. The portion of the secondary battery 100 where the electrode lead 300 and the lead film 400 are positioned is photographed from the top and, for example, this is a photograph showing the portion corresponding to the alternated long and short dash line area of FIG. 3. Referring to FIG. 7, in the battery 100 according to an embodiment, a pressed mark 260a is shown in a portion corresponding to the first sealing portion 260, a pressed mark 260b is shown in a portion corresponding to the second sealing portion 270, and it may be found that the first sealing portion 260 and the second sealing portion 270 overlap each other. The pressed mark 260b of the battery case 200 is found in the overlapping portion of the first sealing portion 260 and the second sealing portion 270. As will be described below, the post sealing block 700 that forms the second sealing portion 270 has a structure in which a first pressing element 710 and a second pressing element 720 form a step therebetween. Accordingly, as the battery case 200 is pressed more forcefully by the first pressing element 710 than by the second pressing element 720, a mark 260b remains due to the difference in the degree of pressing in the portion corresponding to the step between the first pressing element 710 and the second pressing element 720. The pressed marks 260a and 260b do not directly represent the shapes of the first sealing portion 260 and the second sealing portion 270. For reference, the position of the polymer ball PB is shown in FIG. 7. The polymer ball PB is formed so as not to extend beyond the right boundary 400_i of the lead film 400 as illustrated in FIG. 6.

FIG. 8 is a cross-sectional photograph showing the shape of a sealing portion in the secondary battery according to an experimental example of the present disclosure. This is a photograph of a cross-section cut in the Z-axis direction of a portion of the secondary battery 100 where the electrode lead 300 and the lead film 400 are located, and is, for example, a photograph of a portion corresponding to an area including the cross-sections of the first sealing portion 260 and the second sealing portion 270 in FIG. 6. Referring to FIG. 8, it may be found that the polymer ball PB is not only properly formed, but is also formed so as not to extend from the other end 400_i of the lead film 400. The polymer ball PB is formed so as not to extend from the other end 400_i of the lead film 400. When the sealing is performed with excessively strong pressure, the polymer ball PB may protrude convexly in the direction opposite to the protruding direction of the electrode lead 300, and may extend beyond the other end 400_i of the lead film 400 to the inside of the sealing portion 250. Then, as described above, the polymer ball PB may be peeled off together with the lead film 400 when the polymer ball is torn due to the increase of internal gas pressure. In the present disclosure, during the formation of the second sealing portion 270, the polymer ball PB may not be excessively pressed, and the polymer ball PB may be formed so as not to extend beyond the other end 400_i of the lead film 400.

According to an embodiment, the cross-section of the polymer ball PB may be formed concavely in the protruding direction of the electrode lead 300. The polymer ball PB is formed mainly from the resin supplied from the inner resin layer of the battery case 200. Thus, when sealing is performed under appropriate sealing conditions, the polymer ball PB may have a concave cross-sectional shape between the battery case 200 and the lead film 400 as shown in FIG. 8. If sealing is performed with excessively strong pressure, the polymer ball may come out convexly in a direction opposite to the protruding direction of the electrode lead 300, and if excessive, the polymer ball may extend beyond the other end 400_i of the lead film 400 and into the sealing portion 250, which is not desirable.

Multiple secondary batteries 100 according to an embodiment of the present disclosure may be integrated to form a battery module or a battery pack. In addition, such a battery module or battery pack may be applied to various devices. Such devices may include transporters such as electric bicycles, electric vehicles, and hybrid vehicles, but the present disclosure is not limited thereto and may be applied to various devices that may use a battery module or a battery pack.

The secondary battery 100 of the present disclosure may have a high sealing strength by controlling the shape of the sealing portion 250, in particular, the shape and position of the polymer ball PB inside the battery case 200. The sealing device proposed in the present disclosure is designed to be suitable for manufacturing the secondary battery 100 while controlling the shape and position of the polymer ball PB as described above. Hereinafter, a sealing device according to an embodiment of the present disclosure will be described.

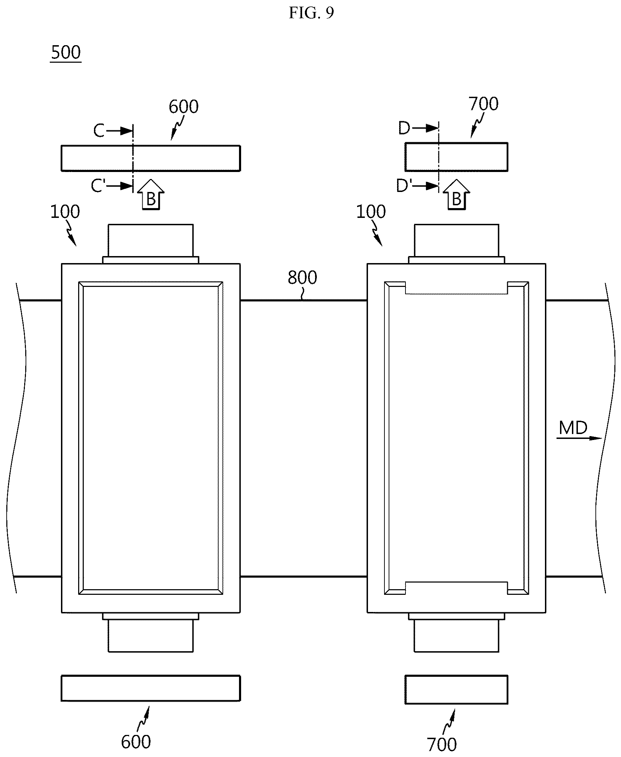

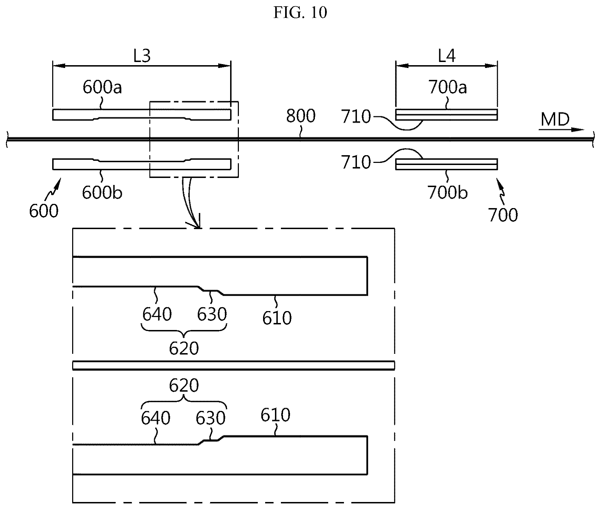

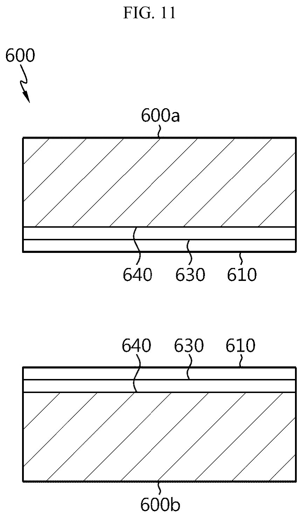

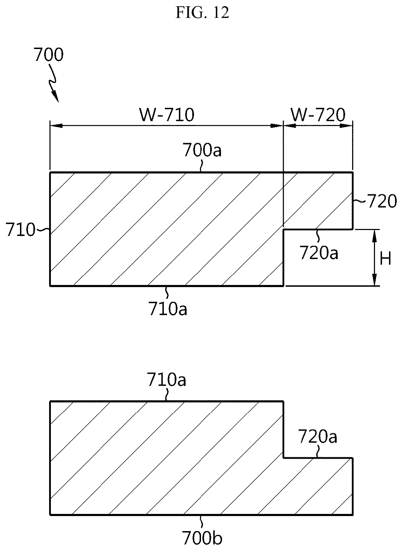

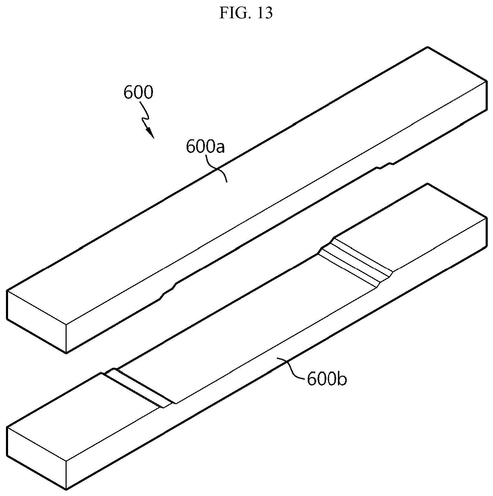

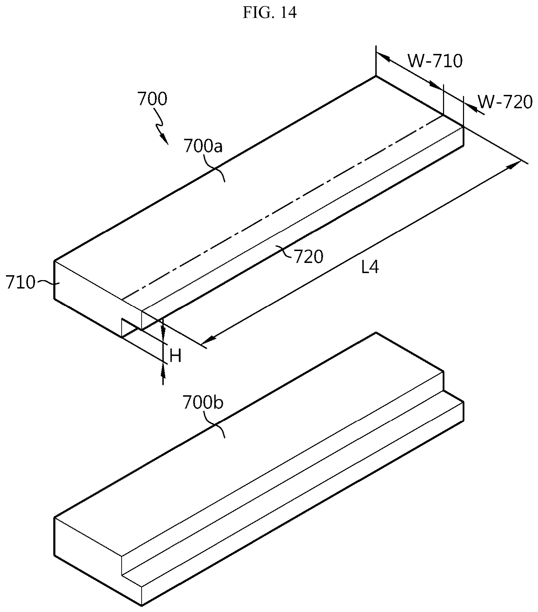

FIG. 9 is a schematic top view of a sealing device, according to an embodiment of the present disclosure. FIG. 10 is view of the sealing device as viewed in direction B in FIG. 9. FIG. 11 is a cross-sectional view taken along line C-C' in FIG. 9. FIG. 12 is a cross-sectional view taken along line D-D' in FIG. 9. FIG. 13 is a perspective view of a main sealing block included in the sealing device of FIG. 9. FIG. 14 is a perspective view of a post sealing block included in the sealing device of FIG. 9.

Referring to FIGS. 9 to 14, the sealing device 500 according to an embodiment of the present disclosure is a sealing device capable of manufacturing the secondary battery 100 according to an embodiment of the present disclosure, which was described with reference to FIGS. 3 to 6. The sealing device 500 is a sealing device of the secondary battery 100 for sealing the battery case 200 in which the electrode assembly 110 with the protruding electrode lead 300 is accommodated.

The sealing device 500 includes a main sealing block 600 and a post sealing block 700. Since it is difficult to supply sufficient heat at once in a short period of time when sealing the battery case 200, the sealing method is improved to enable additional secondary sealing as post sealing after sealing by the main sealing block 600. For this additional secondary sealing, the sealing device 500 is configured to further include the post sealing block 700.

First, the main sealing block 600 is configured to thermally press the top and bottom sides of the battery case 200 using two bar-type rods. The main sealing block 600 includes an upper sealing block 600a and a lower sealing block 600b, and the upper and lower sealing blocks 600a and 600b can be arranged to face each other. The upper sealing block 600a may apply pressure to the first sealing portion 260 on the electrode lead 300 side of the battery case 200 in the top-down direction. The lower sealing block 600b may apply pressure to the first sealing portion 260 in the bottom-up direction. The main sealing block 600 may heat the first sealing portion 260 by generating heat using a heater (not illustrated) accommodated therein, and may also press the first sealing portion 260. The main sealing block 600 is installed to be raised and lowered. Here, the lifter may be provided as, for example, a cylinder, which is generally widely used, but is not necessarily limited thereto. The lifter includes all means that enable the upper sealing block 600a and the lower sealing block 600b to be raised and lowered.

The post sealing block 700 is also configured to thermally press the top and bottom sides of the battery case 200 using two bar-type rods. The post sealing block 700 includes an upper sealing block 700a that applies pressure to the second sealing portion 270 on the electrode lead 300 side of the battery case 200 in the top-down direction and a lower sealing block 700b that applies pressure to the second sealing portion 270 in the bottom-up direction. The post sealing block 700 generates heat by a heater (not illustrated) accommodated therein to heat the second sealing portion 270. The upper sealing block 700a and the lower sealing block 700b of the post sealing block 700 can also be arranged to face each other. The post sealing block 700 is also installed to be raised and lowered. Here, the lifter may be provided as, for example, a cylinder, which is generally widely used, but is not necessarily limited thereto. The lifter includes all means that enable the upper sealing block 700a and the lower sealing block 700b to be raised and lowered.

Here, the heater is configured to heat the first sealing portion 260 of the battery case 200 during sealing by the main sealing block 600, and to heat the second sealing portion 270 of the battery case 200 during sealing by the post sealing block 700 to heat and melt the resin layer on the inner surface of the battery case 200, and various configurations are possible. For example, the heater may be of a type that introduces high-temperature fluid into the internal spaces of the main sealing block 600 and the post sealing block 700. Another example may be of a type that generates heat by a heating wire embedded in the main sealing block 600 and the post sealing block 700.

The post sealing block 700 may be placed on one side of the main sealing block 600. That is, the upper sealing block 700a of the post sealing block 700 may be placed on one side of the upper sealing block 600a of the main sealing block 600, and the lower sealing block 700b of the post sealing block 700 may be placed on one side of the lower sealing block 600b of the main sealing block 600. The main sealing block 600 and the post sealing block 700 may be placed along a working direction MD.

The main sealing block 600 and the post sealing block 700 may be made of, for example, a metal material. The metal material has excellent thermal conductivity and is advantageous for heating the battery case 200. The main sealing block 600 and the post sealing block 700 have a geometric structure corresponding to the width and length of the desired sealing portion, and may be made of materials such as, copper, stainless steel, or steel, all of which have good thermal conductivity.

As described above, the main sealing block 600 and the post sealing block 700 are configured to have different shapes such that the other end 270_i of the second sealing portion 270 of the secondary battery 100 extends further in the direction opposite to the protruding direction of the electrode lead 300 than the other end 260_i of the first sealing portion 260.

In the secondary battery 100 as an example, the electrode leads 300 protrude in opposite directions. In order to further reduce the tact time, the main sealing blocks 600 and the post sealing blocks 700 may be arranged in two rows as illustrated in FIG. 9, so that each may approach the electrode leads 300 protruding in the opposite directions, allowing sealing to be performed simultaneously on both sides. When the electrode leads 300 protrudes only in one direction, the main sealing block 600 and the post sealing block 700 may be arranged in only one row.

Meanwhile, referring to FIGS. 10 and 13, the main sealing block 600 may include a recess 620 corresponding to the electrode lead 300 side including the lead film 400 on each of the bottom surface of the upper sealing block 600a and the top surface of the lower sealing block 600b.

The bottom surface of the upper sealing block 600a and the top surface of the lower sealing block 600b of the main sealing block 600 may include peripheral pressing portions 610, respectively, which press the battery case 200, and the recesses 620 may press the electrode lead 300 and the lead film 400.

The recesses 620 correspond to the sealing portion on the electrode lead 300 side. The recesses 620 may include an electrode lead pressing portion 640 that presses the electrode lead 300 and an intermediate pressing portion 630 that connects the electrode lead pressing portion 640 and the peripheral pressing portion 610 in a stepwise manner. The intermediate pressing portion 630 can be rectangular or diagonal.

According to an embodiment, in the main sealing block 600, the peripheral pressing portion 610 is a portion for sealing a portion of the battery case 200 where the lead film 400 and the electrode lead 300 do not exist. The intermediate pressing portion 630 is a portion for sealing a portion of the battery case 200 where only the lead film 400 exists. The electrode lead pressing portion 640 is a portion for sealing a portion of the battery case 200 where the electrode lead 300 exists, that is, an overlapping portion of the electrode lead 300, the lead film 400, and the battery case 200. In this way, the main sealing block 600 may have three steps. By providing such steps, the degree of pressing may be adjusted for each position. As a result, the sealing pressure at each position and the corresponding sealing strength may be adjusted. Thus, a secure seal may be achieved without any empty space between the lead film 400 and the electrode lead 300.

According to an embodiment, the upper sealing block 600a and the lower sealing block 600b of the main sealing block 600, even with this stepped structure, are not a combination of separate configurations with steps, but an integrated configuration. That is, they are a single mass. Accordingly, the main sealing block 600 is easy to manufacture and machine, and maintenance is straightforward.

By forming the recesses 620 as in the present embodiment, the precision of positioning the electrode lead 300 and the lead film 400 within the recesses 620 may be enhanced, and it may be ensured that there is little gap between the lead film 400 and the recesses 620, thereby further enhancing the sealing reliability. Accordingly, the sealing property of the battery case 200 around the electrode lead 300 may be greatly improved. The sealing property of the secondary battery 100 may be improved by ensuring that the electrode lead 300, the lead film 400, and the battery case 200 are more securely in close contact with each other, and in doing so, the unsealed areas may be significantly reduced.

In the case of high-capacity, high-power, medium-to-large-sized secondary batteries, with rapidly increasing demand, the thickness of the electrode lead 300 is increasing depending on the size and capacity of the included unit cells. Therefore, even when the size of the electrode lead 300 increases, the non-sealing area not pressed by the main sealing block 600 does not increase, and sealing may still be performed smoothly. In addition, since the positioning is accurate regardless of the thickness of the electrode lead 300, the sealing reliability may be ensured.

The length L3 of the main sealing block 600 may be greater than the width of the electrode lead 300 including the lead film 400 and extends to the battery case 200 surrounding them. Here, the length L3 of the main sealing block 600 refers to the maximum value of the distance from one end of the main sealing block 600 to the other end in a direction orthogonal to the protruding direction of the electrode lead 300, and may correspond to the length L1 in the longitudinal direction of the first sealing portion 260 in FIG. 4.

Referring to FIG. 10, the length L4 of the post sealing block 700 may be smaller than the length L3 of the main sealing block 600. Here, the length L4 of the post sealing block 700 refers to the maximum value of the distance from one end of the post sealing block 700 to the other end in a direction orthogonal to the protruding direction of the electrode lead 300, and may correspond to the length L2 in the longitudinal direction of the first sealing portion 270 in FIG. 4.

According to an embodiment, the length L4 of the post sealing block 700 may be adjustable depending on the length L2 of the second sealing portion 270, but may be, for example, 30 mm to 100 mm.

As illustrated in FIGS. 10 and 12 to 14, the upper sealing block 600a and the lower sealing block 600b of the main sealing block 600 have steps formed in a top-down direction. In contrast, the upper sealing block 700a and the lower sealing block 700b of the post sealing block 700 have steps formed in the direction opposite to the protruding direction of the electrode lead 300. Here, the steps may be formed such that the pressing surfaces do not align on the same plane but have a height difference. By providing the steps, the degree of pressing may be adjusted for each position.

Referring to FIGS. 12 and 14, the post sealing block 700 may include a first pressing portion 710 that presses the battery case 200 in a portion overlapping the first sealing portion 260 and a second pressing portion 720 that presses the battery case 200 in a portion opposite to the protruding direction of the electrode lead 300 from the first pressing portion 710.

According to an embodiment, the width W-710 of the first pressing portion 710 may be, for example, about 2 mm to 6 mm, and may be adjustable depending on the width of the sealing portion 250, for example, the width W2 of the second sealing portion 270.

As will be described later, the post sealing block 700 additionally presses the polymer ball PB generated when forming the first sealing portion 260 using the main sealing block 600. The width W-720 of the second pressing portion 720 may be flexibly determined depending on the degree of spreading of the polymer ball PB. For example, the width W-720 of the second pressing portion 720 may be 1 mm to 4 mm.

As another example, the width W-720 of the second pressing portion 720 may not exceed 50% of the width W-710 of the first pressing portion 710. For example, the width W-710 of the first pressing portion 710 may be about 4 mm, and the width W-720 of the second pressing portion 720 may be about 2 mm. Here, the width W-720 of the second pressing portion 720 and the width W-710 of the first pressing portion 710 refer to the dimensions in the protruding direction of the electrode lead 300. When these conditions are satisfied between the width W-720 of the second pressing portion 720 and the width W-710 of the first pressing portion 710, the shape and position of the polymer ball PB may be effectively controlled.

According to an embodiment, the second pressing portion 720 protrudes in a direction opposite to the protruding direction of the electrode lead 300 in a direction orthogonal to the first pressing portion 710. In the present embodiment, the first pressing portion 710 has a first pressing surface 710a, which is a single flat surface that comes into contact with the battery case 200. The second pressing portion 720 has a second pressing surface 720a, which is a single flat surface that comes into contact with the battery case 200.

The first pressing portion 710 may protrude further toward the electrode lead 300 than the second pressing portion 720. In other words, the first pressing surface 710a may be positioned closer to the electrode lead 300 than the second pressurizing surface 720a. The height difference H between the first pressing portion 710 and the second pressing portion 720 may be about 0.1 mm to 5 mm. Here, the height difference H may be the distance between the first pressing surface 710a and the second pressing surface 720a. This height difference H may be determined depending on, for example, the thickness and pressing force of the polymer ball PB.

In this way, due to the height difference H between the first pressing portion 710 and the second pressing portion 720, a step is formed in the post sealing block 700 in the direction opposite to the protruding direction of the electrode lead 300. In particular, due to this step, the pressing force applied by the first pressing surface 710a is greater than the pressing force applied by the second pressing surface 720a. By providing the step as described above, the degree of pressing may be adjusted for each position.

By having a structure where the first pressing portion 710 and the second pressing portion 720 form a step, the distance between the first pressing surface 710a of the upper sealing block 700a and the first pressing surface 710a of the lower sealing block 700b in the post sealing block 700 may be smaller than the distance between the second pressing surface 720a of the upper sealing block 700a and the second pressing surface 720a of the lower sealing block 700b. When the upper sealing block 700a and the lower sealing block 700b press an edge of the battery case 200 from both the top and bottom directions, greater pressure is applied to the area between the first pressing surface 710a of the upper sealing block 700a and the first pressing surface 710a of the lower sealing block 700b, which has a smaller distance. In other words, even when the upper sealing block 700a and the lower sealing block 700b are pressed against the battery case 200 with the same pressure, there will be a difference in the actual pressure applied through the first pressing portion 710 and the second pressing portion 720.

In the present embodiment, the second pressing portion 720 may be subjected to relatively reduced pressure compared to the first pressing portion 710. Therefore, the sealing area formed by the first pressing portion 710 may undergo firm thermal fusion, ensuring that the battery case 200 is strongly sealed. In contrast, the sealing area formed by the second pressing portion 720 may be sealed with relatively relaxed thermal fusion.

When the first sealing portion 260 is formed by the main sealing block 600, a polymer ball PB may be formed inside the battery case 200. The post sealing block 700 further applies heat and pressure to the previously formed polymer ball PB. Thus, when the second sealing portion 270 is formed by the post sealing block 700, a stronger seal may be achieved.

The second pressing portion 720 may press the polymer ball PB with relatively less force compared to the first pressing portion 710. By configuring the post sealing block 700 with a stepped structure in this way, the polymer ball PB may be further pressed to improve the fusion between the resin of the battery case 200 and the resin of the lead film 400, thereby increasing the sealing strength. At the same time, the polymer ball PB is not excessively pressed, ensuring that, as described with reference to FIG. 6, the polymer ball PB does not extend beyond the other end 400_i of the lead film 400.

The upper sealing block 700a and the lower sealing block 700b of the post sealing block 700, even with this stepped structure, are not a combination of separate components with steps, but an integrated configuration. That is, they are a single mass. Accordingly, the post sealing block 700 is easy to manufacture and machine, and maintenance is straightforward.

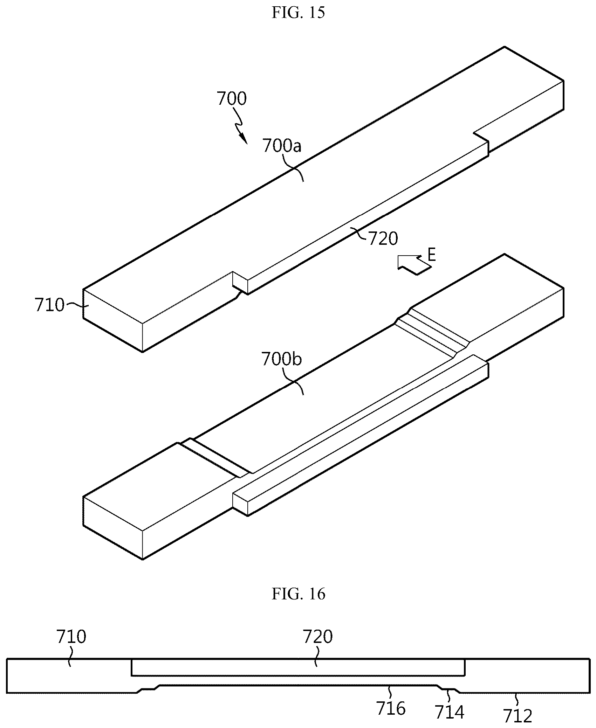

FIG. 15 illustrates a modification of the post sealing block illustrated in FIG. 14. FIG. 16 is a view illustrating the upper post sealing block of FIG. 15 as seen from direction E.

Referring to FIGS. 15 and 16, unlike the post sealing block 700 illustrated in FIG. 14, the post sealing block 700 in the present embodiment has a structure where the first pressing portion 710 also forms a step.

Referring to FIGS. 15 and 16, the first pressing portion 710 may include a peripheral pressing portion 712 that presses the battery case 200, an electrode lead pressing portion 716 that presses the electrode lead 300, and an intermediate pressing portion 714 that connects the electrode lead pressing portion 716 and the peripheral pressing portion 712 in a stepwise manner. Steps are formed between the peripheral pressing portion 712, the intermediate pressing portion 714, and the electrode lead pressing portion 716 to vary the sealing pressure. In the aforementioned secondary battery 100, the second sealing portion 270 overlaps with the first sealing portion 260, and the other end 270_i of the second sealing portion 270 extends further in the direction opposite to the protruding direction of the electrode lead 300 than the other end 260_i of the first sealing portion 260. The shapes of the main sealing block 600 and the post sealing block 700 of the sealing device 500 are designed to form the first sealing portion 260 and the second sealing portion 270 in this way. The second sealing portion 270 may be said to extend further inward toward the inside of the battery case 200 (in the direction opposite to the protruding direction of the electrode lead 300) than the first sealing portion 260. Therefore, it may be said that the post sealing block 700 is formed to press and heat the inner portion of the battery case 200 more than the main sealing block 600, allowing for sealing.

Referring back to FIG. 9, a conveyor belt 800 may be arranged between the upper sealing blocks 600a and the lower sealing blocks 600b of the main sealing blocks 600, and between the upper sealing blocks 700a and the lower sealing blocks 700b of the post sealing blocks 700, so that the secondary battery 100 can be transported along the MD direction. The secondary battery 100 is supported on the conveyor belt 800 so that the electrode leads 300 are positioned outside the conveyor belt 800, thereby allowing the second battery 100 to be transported from the main sealing blocks 600 to the post sealing blocks 700 as the conveyor belt 800 moves. Since the first sealing by the main sealing blocks 600 and the second sealing by the post sealing blocks 700 are both performed within the same sealing device 500, the tact time may be significantly reduced.

The sealing method using the sealing device 500 may proceed as follows.

A secondary battery 100 to be sealed is placed on the moving conveyor belt 800. When the secondary battery 100 is positioned between the upper sealing blocks 600a and the lower sealing blocks 600b of the main sealing blocks 600 by the movement of the conveyor belt 800, the upper sealing blocks 600a lower, and the lower sealing blocks 600b rises to come into contact with the battery case 200, thereby sealing the secondary battery 100. Through this process, the first sealing portions 260 of the secondary battery 100 may be formed first.

FIG. 9 represents the state of the secondary battery 100 positioned at the main sealing blocks 600 after the first sealing, and the secondary battery is briefly illustrated in a shape including the first sealing portions 260. At this time, the resin fused between the battery case 200 and the lead films 400 is pushed into the first sealing portions 260 by the main sealing blocks 600, and the polymer balls (PB) may be initially formed.

After the first sealing portions 260 are formed, the upper sealing blocks 600a rises and the lower sealing blocks 600b lowers, moving away from the secondary battery 100. The secondary battery 100 on the conveyor belt 800 is then continuously transported by the moving conveyor belt 800 and positioned between the upper sealing blocks 700a and the lower sealing blocks 700b of the post sealing blocks 700. Then, the upper sealing blocks 700a lowers and the lower sealing blocks 700b rises, coming into contact with the battery case 200, thereby performing the second sealing on the secondary battery 100, which enables the second sealing portions 270 to be additionally formed.

FIG. 9 represents the state of the secondary battery 100 illustrated at the position of the post sealing block 700 after the second sealing subsequent to the first sealing, and the secondary battery is briefly illustrated in a shape including the second sealing portions 270. At this time, the polymer balls (PB) between the battery case 200 and the lead films 400 may be formed at controlled positions.

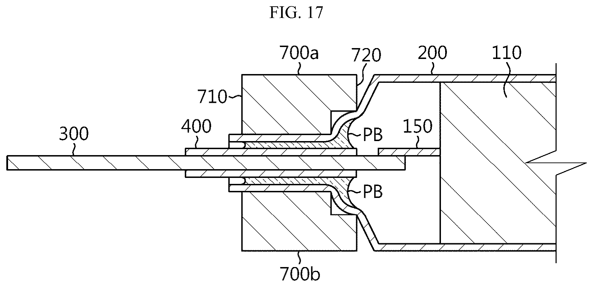

FIG. 17 is a cross-sectional view of the sealing step performed by the post sealing block of FIG. 14 illustrating the operation of the post sealing block 700 during the second sealing. By introducing steps into the post sealing block 700, a polymer ball may be pressed, but ultimately the polymer ball PB is suppressed or prevented from flowing out beyond the other end 400_i of the lead film 400, toward the inside of the secondary battery 100.

The sealing device of the present disclosure is characterized by achieving additional sealing through the post sealing block 700, as illustrated in FIG. 17. During the second sealing using the post sealing block 700, the polymer ball PB, which was formed during the first sealing, may be further pressed while applying heat. Consequently, the shape and position of the polymer ball PB may be controlled, and the sealing strength may be further improved by the second sealing.

The sealing method using this sealing device 500 includes performing the first sealing using the main sealing block 600 and performing the second sealing using the post sealing block 700. The shapes of the first sealing portion 260 formed by the first sealing and the second sealing portion 270 formed by the second sealing are different. During the second sealing, pressing the polymer ball PB formed in the first sealing is further performed.

In the first sealing, the upper sealing block 600a and the lower sealing block 600b of the main sealing block 600 are positioned above and below an edge of the battery case 200, and pressure and heat are applied to the area to be sealed from the top and bottom, forming a first sealing portion 260. According to an embodiment, the pressure applied to the first sealing portion 260 may range from 0.1 MPa to 5 MPa. Furthermore, the pressure applied to the first sealing portion 260 may be continuously maintained using pressure gauges attached to the upper sealing block 600a and the lower sealing block 600b to ensure that constant pressure is applied during the sealing. Heat in the range of 150°C to 300°C may be applied to the first sealing portion 260. When the temperature is below 150°C, the sealing may not be properly achieved, and when the temperature exceeds 300°C, the battery case 200 may be damaged by the heat.

In the second sealing, the upper sealing block 700a and the lower sealing block 700b of the post sealing block 700 are positioned above and below an edge of the battery case 200, and pressure and heat are applied to the area to be sealed from the top and bottom, forming a second sealing portion 270. According to an embodiment, the pressure applied to the second sealing portion 270 may range from about 0.1 MPa to 5 MPa. Furthermore, the pressure applied to the second sealing portion 270 may be continuously maintained using pressure gauges attached to the upper sealing block 700a and the lower sealing block 700b to ensure that constant pressure is applied during the sealing. Heat in the range of about 150°C to 300°C may be applied to the second sealing portion 270. When the temperature is below 150°C, the sealing may not be properly achieved, and when the temperature exceeds 300°C, the battery case 200 may be damaged by the heat.

The pressing force during the first sealing may differ from that during the second sealing. For example, the pressing force during the first sealing may be about 1 MPa to 3 MPa, while the pressing force during the second sealing may be about 0.5 MPa to 2 MPa.

The sealing temperature during the first sealing may be the same as or different from the sealing temperature during the second sealing. For example, the sealing temperature during the first sealing may range from about 130°C to 250°C, while during the second sealing, the sealing temperature may range from about 50°C to 200°C.

The sealing time for the first sealing may be the same as or different from the sealing time for the second sealing. Although having the same sealing time may be desirable in view of a tact time, it is also possible to have different sealing times. For example, the sealing time during the first sealing may range from 1 second to 4 seconds, while the sealing time during the second sealing may be 5 seconds or longer.

The thickness of the polymer ball PB after the second sealing may be about 60% to 90% of the thickness of the polymer ball PB after only the first sealing. In another example, the thickness of the polymer ball PB after only the first sealing may range from about 220 µm to 290 µm, while, after the second sealing, the thickness of the polymer ball PB may range from about 150 µm to 170 µm.

The sealing strength of the battery case 200 after the second sealing may be greater than the sealing strength after only the first sealing. This is because, in addition to the formation of the first sealing portion 260, the second sealing portion 270 is further formed, and the first sealing portion 260 and the second sealing portion 270 overlap.

As illustrated in FIGS. 12 and 14, the first pressing portion 710 protrudes further toward the electrode lead 300 than the second pressing portion 720, and during the second sealing, the second pressing portion 720 may press the polymer ball PB formed during the first sealing.

Furthermore, as illustrated in FIGS. 15 and 16, the first pressing portion 710 may have steps formed sequentially by the peripheral pressing portion 712, the intermediate pressing portion 714, and the electrode lead pressing portion 716. In other words, the second pressing portion 720 has a smaller height than the step of the electrode lead pressing portion 716, and this portion will press the polymer ball PB.

By configuring the first pressing portion 710 with a stepped structure, the area sealed by the main sealing block 600 may be positioned within the stepped structure of the first pressing portion 710, reducing positional errors during the second sealing. This may ensure that the sealing area around the electrode lead 300 is always aligned with the post sealing block 700, enabling precise and uniform sealing.

As illustrated in FIGS. 6 and 17, the steps in the post sealing block 700 are designed to prevent the pressed polymer ball PB from extending beyond the other end 400_i of the lead film 400.

According to the present disclosure, by configuring the sealing device 500 to include the main sealing block 600 and the post sealing block 700, the sealing strength of the sealing portion 250 may be increased. This may suppress or prevent the leakage of electrolyte from the battery case 200 to the outside and may enhance the sealing strength and sealing reliability of the secondary battery 100.

By using the sealing device 500 of the present disclosure, the overlapping area of the first sealing portion 260 and the second sealing portion 270 has the effect of sealing twice, resulting in a high sealing strength for the secondary battery 100, even when sealing is performed at a lower temperature.

The sealing device 500 of the present disclosure eliminates the need to seal at a high temperature that could damage the surface of the battery case 200. Even with low-temperature sealing, the dual sealing process involving the main sealing and the post sealing may ensure that the secondary battery 100 produced has high sealing strength.

According to the present disclosure, the polymer ball PB formed in the inner space of the battery case 200 during the first sealing may be further pressed during the second sealing, thereby improving the sealing strength. At this time, the sealing device 500 is characterized by incorporating the post sealing block 700 with a stepped structure to prevent the polymer ball PB from being excessively pressed and extending beyond the other end 400_i of the lead film 400. As a result, even though the thickness of the polymer ball PB is reduced and its length is increased during the additional pressing, the length may be controlled to resolve venting issues of the secondary battery.

Thus, according to the present disclosure, the shape and position of the polymer ball PB within the sealing portion 250 may be controlled, allowing for complete sealing. This may prevent the leakage of electrolyte from the battery case 200 to the outside and may enhance the sealing strength and sealing reliability of the secondary battery 100.

According to the present disclosure, the secondary battery may be transported and sealed while the conveyor belt runs between the main sealing block 600 and the post sealing block 700. Thus, the sealing device 500 is improved to achieve sufficient sealing strength even with a short tact time. This may contribute to resolving venting issues of secondary batteries 100 and improving productivity. In addition, since the first and second sealing processes may be carried out in a fully automated process, deviation between cells may be reduced during mass production of secondary batteries 100.

Although embodiments of the present disclosure have been illustrated and described above, the present disclosure is not limited to the specific embodiments described above. Various modifications and implementations may be made by those skilled in the art without departing from the spirit of the disclosure as claimed in the claims, and such modifications are within the scope of the claims.

**[Reference Signs]**

| | | | |
|---|---|---|---|
| 100: | secondary battery | 110: | electrode assembly |
| 200: | battery case | 250: | sealing portion |
| 260: | first sealing portion | 270: | second sealing portion |
| 300: | electrode lead | 400: | lead film |
| 500: | sealing device | 600: | main sealing block |
| 610, 712: | peripheral pressing portion | 620: | recess |
| 630, 714: | intermediate pressing portion | 640, 716: | electrode lead pressing portion |
| 700: | post sealing block | 710: | first pressing portion |
| 720: | second pressing portion | 800: | conveyor belt |

## Claims

1. A secondary battery comprising:
a battery case accommodating therein an electrode assembly with an electrode lead protruding therefrom and including a sealing portion in which an outer perimeter is sealed,
wherein the sealing portion includes:
a first sealing portion on the electrode lead side of the battery case; and
a second sealing portion on the electrode lead side of the battery case, and
wherein the first sealing portion and the second sealing portion each have one end and another end in a protruding direction of the electrode lead, and the another end of the second sealing portion extends further in a direction opposite to the protruding direction of the electrode lead than the another end of the first sealing portion.

2. The secondary battery of claim 1, wherein the first sealing portion has a length greater than that of the second sealing portion, and the second sealing portion has a width greater than that of the first sealing portion.

3. The secondary battery of claim 1, wherein the first sealing portion and the second sealing portion are at least partially overlapped in the protruding direction of the electrode lead.

4. The secondary battery of claim 1, wherein the one end of the second sealing portion and the one end of the first sealing portion are positioned on a same line.

5. The secondary battery of claim 1, wherein the one end of the second sealing portion is spaced apart from the one end of the first sealing portion in the direction opposite to the protruding direction of the electrode lead.

6. The secondary battery of claim 1, further comprising:
a lead film located at a portion corresponding to the first sealing portion and the second sealing portion,
wherein the lead film includes one end and another end in the protruding direction of the electrode lead, and
wherein a polymer ball is formed by fused resin between the battery case and the lead film inside the second sealing portion, and the polymer ball is formed so as not to extend beyond the another end of the lead film.

7. A sealing device for a secondary battery that seals a battery case accommodating therein an electrode assembly with an electrode lead protruding therefrom, the sealing device comprising:
a main sealing block including an upper sealing block configured to apply pressure to a first sealing portion of the battery case on the electrode lead side in a top-down direction, and a lower sealing block configured to apply pressure to the first sealing portion in a bottom-up direction; and
a post sealing block including an upper sealing block configured to apply pressure to a second sealing portion of the battery case on the electrode lead side in the top-down direction, and a lower sealing block configured to apply pressure to the second sealing portion in the bottom-up direction,
wherein the first sealing portion and the second sealing portion each include one end and another end in the protruding direction of the electrode lead, and the main sealing block and the post sealing block have different shapes such that the another end of the second sealing portion extends further in a direction opposite to the protruding direction of the electrode lead than the another end of the first sealing portion.

8. The sealing device of claim 7, wherein the electrode lead includes a lead film attached thereto and having one end and another end in the protruding direction of the electrode lead, and the main sealing block includes, on each of a bottom surface of the upper sealing block and a top surface of the lower sealing block, a recess that corresponds to the electrode lead side including the lead film.

9. The sealing device of claim 8, wherein the bottom surface of the upper sealing block and the top surface of the lower sealing block of the main sealing block each include a peripheral pressing portion configured to press the battery case, and the recess is configured to press the electrode lead and the lead film.

10. The sealing device of claim 9, wherein the recess includes an electrode lead pressing portion configured to press the electrode lead and an intermediate pressing portion connecting the electrode lead pressing portion to the peripheral pressing portion in a stepwise manner.

11. The sealing device of claim 8, wherein the main sealing block has a width greater than that of the electrode lead including the lead film, such that the main sealing block extends to the battery case around the electrode lead.

12. The sealing device of claim 11, wherein the post sealing block has a length smaller than that of the main sealing block.

13. The sealing device of claim 7, wherein the upper sealing block and the lower sealing block of the main sealing block have a step formed in a top-down direction, and the upper sealing block and the lower sealing block of the post sealing block have a step formed on a side opposite to the protruding direction of the electrode lead.

14. The sealing device of claim 7, wherein the post sealing block includes:
a first pressing portion configured to press a portion overlapping the first sealing portion; and
a second pressing portion configured to press a portion in a direction opposite to the protruding direction of the electrode lead relative to the first pressing portion.

15. The sealing device of claim 14, wherein the second pressing portion has a width that does not exceed 50% of that of the first pressing portion.

16. The sealing device of claim 14, wherein the first pressing portion protrudes further toward the electrode lead than the second pressing portion.

17. The sealing device of claim 16, wherein the height difference between the first pressing portion and the second pressing portion is 0.1 mm to 5 mm.

18. The sealing device of claim 14, wherein the second pressing portion protrudes in a direction orthogonal to the first pressing portion,
wherein the first pressing portion has a first pressing surface, which is a single flat surface that comes into contact with the battery case,
wherein the second pressing portion has a second pressing surface, which is a single flat surface that comes into contact with the battery case, and
wherein pressing force applied by the first pressing surface is greater than pressing force applied by the second pressing surface.

19. The sealing device of claim 14, wherein the second pressing portion protrudes in a direction orthogonal to the first pressing portion, and
wherein the first pressing portion includes:
a peripheral pressing portion configured to press the battery case;
an electrode lead pressing portion configured to press the electrode lead; and
an intermediate pressing portion that connects the electrode lead pressing portion and the peripheral pressing portion in a stepwise manner.

20. The sealing device of claim 8, wherein, when the battery case is positioned in the main sealing block, resin fused between the battery case and the lead films is pushed into the first sealing portion by the main sealing block, and a polymer ball is initially formed, and
wherein, when the battery case moves from the main sealing block and is positioned in the post sealing block, the polymer ball is pressed by the post sealing block.

21. The sealing device of claim 20, wherein the post sealing block has a step formed so as to prevent the pressed polymer ball from extending beyond the another end of the lead film.
